# EUROPÄISCHE PATENTSCHRIFT

(11) **EP 2 350 239 B1**
(45) Veröffentlichungstag und Bekanntmachung des Hinweises auf die Patenterteilung: **28.03.2018**
(21) Anmeldenummer: 08875033.6
(22) Anmeldetag: 24.11.2008
(51) Int. Cl.: C10L 5/44

(54) **VERFAHREN ZUR AUFBEREITUNG VON BRAUNKOHLE**
METHOD FOR PREPARING BROWN COAL
PROCÉDÉ DE PRÉPARATION DE LIGNITE

(43) Veröffentlichungstag der Anmeldung: 03.08.2011
(73) Patentinhaber: RWE Power Aktiengesellschaft, 45128 Essen (DE)
(72) Erfinder: KLUTZ, Hans-Joachim, 50374 Erftstadt (DE)
(74) Vertreter: Kierdorf Ritschel Richly
(86) Internationale Anmeldenummer: PCT/EP2008/009925
(87) Internationale Veröffentlichungsnummer: WO 2010/057512

(56) Entgegenhaltungen:
- DE-A1- 10 150 135
- DE-A1-102006 045 042
- GB-A- 358 181
- US-A- 4 615 712
- US-A1- 2008 041 982

## Beschreibung

Die Erfindung betrifft ein Verfahren zur Aufbereitung von Braunkohle zur Verbrennung und/oder Vergasung zwecks Stromerzeugung, wobei die grubenfeuchte Braunkohle zunächst vorgebrochen und anschließend in einer Mahleinrichtung zerkleinert wird und anschließend die gemahlene Kohle einer Trocknung zugeführt wird.

Ein solches Verfahren ist beispielsweise aus der 196 18 880 A1 bekannt. Bei dem Verfahren gemäß DE 196 18 880 A1 erfolgt zunächst eine Vorbrechung der grubenfeuchten Braunkohle auf eine Korngröße von etwa 50-150 mm. Nach der Vorbrechung erfolgt eine Fremdkörperaushaltung von Holzresten, Xylit-Anteilen, Beimengungen von Pyrit, metallenen und nichtmetallenen Fremdkörpern, etc.. Der Fremdkörperaushaltung ist eine mehrstufige Feinkornaufbereitung nachgeschaltet. Dabei ist beispielsweise eine mehrstufige Feinmahlung mit entsprechender Siebklassierung vorgesehen.

Das aufbereitete Feinkorn wird einem Wirbelbetttrockner zugeführt, in welchem zwangsläufig prozessbedingt eine interne Nachzerkleinerung der Braunkohle erfolgt. Je nach den Anforderungen des Kessels erfolgt eine Nachsiebung der Trockenkohle hinter dem Trockner und eine Nachmahlung des Überkornanteils. Es hat sich für den Kraftwerksprozess als energetisch besonders günstig herausgestellt, die zerkleinerte Rohbraunkohle in der vorbeschriebenen Art und Weise in einem Wirbelbetttrockner zu trocken und in getrockneter Form dem Kessel zuzuführen. Es ist bekannt, dass durch eine energetisch günstige separate Vortrocknung der Wirkungsgrad eines Kraftwerks, insbesondere gegenüber einem konventionellen Kraftwerk mit Mahltrocknung gesteigert werden kann. Dabei ist es wichtig, den Trockner mit einem möglichst gleichmäßig feinen Kornspektrum an Braunkohle zu beschicken, wobei der Überkornanteil verhältnismäßig gering sein sollte, um die Wärmeübertragungsverhältnisse im Wirbelschichttrockner beziehungsweise Wirbelbetttrockner zu verbessern. Darüber hinaus wird hierdurch gewährleistet, dass bei mäßiger Fluidisierungsgeschwindigkeit bereits eine gute Fluidisierung der Braunkohle im Wirbelbettrockner eintritt.

Bei der Durchführung von Versuchen hat sich allerdings herausgestellt, dass sowohl Holzanteile der Kohle als auch Fremdstoffe in der Kohle in den Wirbelbetttrocknern, die mit verhältnismäßig dicht gepackten Wärmetauschern ausgerüstet sind, zu erheblichen Betriebsproblemen führen können, die die Leistung und Effizienz des Verfahrens erheblich beeinträchtigen. Es sind daher Versuche unternommen worden, sowohl die Vorzerkleinerung der Braunkohle wirkungsvoller zu gestalten, als auch die Fremdkörperaushaltung unmittelbar nach der Vorzerkleinerung zu verbessern.

Aus der US 4,615,712 A ist ein Verfahren zur Aufbereitung von Braunkohle bekannt, bei welchem die grubenfeuchte Braunkohle zunächst in einer Mahleinrichtung zerkleinert wird und anschließend einer Nachsiebung unterzogen wird. Die nachgesiebten Kohlepartikel werden anschließend mit Wasser und Bindemittel versetzt und zu Agglomeraten in Form von Pellets verarbeitet.

Aus dem Dokument GB 358 181 A ist ebenfalls ein Verfahren zur Aufbereitung und Agglomerierung von Kohlepartikeln bekannt, bei welchem zunächst vor einer Aufmahlung und Agglomeration der Kohlepartikel ein ein- oder mehrstufiges Aufbereitungsverfahren zur Aushaltung von Schiefer durchgeführt wird. Bei einer Variante des Verfahrens ist vorgesehen, den Schiefer durch Flotation der Kohle auszuhalten, bei einer anderen Variante des Verfahrens ist eine mehrstufige Siebklassierung der Mühle vorgeschaltet.

Aus der DE 2006 045 042 A1 ist eine Brennstoffherstellung aus Abfall durch Luftherd gestützte Siebtrennung bekannt.

Der Erfindung liegt daher die Aufgabe zu Grunde, ein Verfahren der eingangs genannten Art hinsichtlich der Aushaltung von Fremdstoffen und/oder Fremdkörpern zu verbessern.

Die Aufgabe wird gelöst durch ein Verfahren zur Aufbereitung von Braunkohle zur Verbrennung und/oder Vergasung zwecks Stromerzeugung , wobei die grubenfeuchte Braunkohle zunächst vorgebrochen und anschließend in wenigstens einer Mahleinrichtung zerkleinert wird und anschließend die gemahlenen Braunkohle einer Trocknung zugeführt wird, wobei der Mahleinrichtung Mittel zur Fremdkörperaushaltung aus dem Materialstrom unmittelbar nachgeschaltet sind, und wobei der aus der Mahleinrichtung austretende Materialstrom einer Nachsiebung unterzogen wird, wobei die Siebweite so gewählt wird, dass der Siebdurchgang der Braunkohle 100 % beträgt.

Vorteilhafte Ausgestaltungen der Erfindung ergeben sich aus den Unteransprüchen.

Die Erfindung geht hinsichtlich der Fremdkörperaushaltung neue Wege. Anders als im Stand der Technik ist erfindungsgemäß vorgesehen, die Fremdkörperaushaltung der Mahlung nachzuschalten. Ein gewisser Anteil an Fremdkörpern und Fremdstoffen würde zwar auch bei einer Nachsiebung im Sinne einer Siebklassierung ausgehalten werden, die Nachsiebung erfolgt jedoch üblicherweise im Hinblick auf den gewünschten Trennschnitt so, dass der Überkornanteil einer Nachmahlung unterzogen wird und somit die ausgehaltenen Fremdstoffe zumindest eine gewisse Zeit im Kreislauf gefahren würden. Schließlich ist es nicht ausgeschlossen, dass während der Feinkohlenaufbereitung noch Fremdkörper in den Massenstrom gelangen.

Es hat sich daher als besonders vorteilhaft herausgestellt, den aus der Mahleinrichtung austretenden Materialstrom einer Nachsiebung zu unterziehen, dergestalt, dass die Siebweite so gewählt wird, dass der Siebdurchgang der Braunkohle 100 % beträgt. Auf diese Art und Weise können Fremdkörper vor einer weiteren ggf. nachgeschalteten Siebklassierung ausgehalten werden.

Unter Nachsiebung im Sinne der Erfindung ist, wie vorstehend bereits erwähnt, keine Siebklassierung im eigentlichen Sinne zu verstehen, bei der ein bestimmter Trennschnitt innerhalb der Kornfraktion angestrebt wird. Vielmehr sollen sich bei der Nachsiebung gemäß der Erfindung 100 % der Braunkohle im Siebdurchgang befinden, d.h., diese Nachsiebung ist eine Kontrollsiebung.

Bei dem Verfahren gemäß der Erfindung wird zweckmäßigerweise die Braunkohle auf eine durchschnittliche Korngröße von 0-2 mm vermahlen. Die Braunkohle wird nach ihrer Vermahlung einer Trocknung in einem Wirbelbetttrockner unterzogen.

Dabei ist es zweckmäßig, wenn die Braunkohle auf einen mittleren Korndurchmesser (D50) von maximal 1 mm zerkleinert wird.

Besonders bevorzugt erfolgt die Nachsiebung unter Verwendung einer Siebeinrichtung mit einer Maschenweite von wenigstens 4 x 6 mm, vorzugsweise von etwa 6 x 10 mm bis etwa 10 x 15 mm. Bei einer Variante des Verfahrens nach der Erfindung ist vorgesehen, dass die Zerkleinerung der Braunkohle zweistufig unter Verwendung zweier hintereinandergeschalteter Mahleineinrichtungen erfolgt, wobei die Nachsiebung (Kontrollsiebung) hinter der zweiten Zerkleinerungsstufe erfolgt.

Die Nachsiebung kann mittels wenigstens eines belüfteten und/oder beheizten Schwingsiebes erfolgen, das dem Mühlenaustrag unmittelbar nachgeschaltet ist. Das Schwingsieb kann so ausgebildet und angeordnet sein, dass es der Geometrie des Mühlenaustrages angepasst ist.

Die Erfindung wird nachstehend anhand eines in den Zeichnungen dargestellten Ausführungsbeispiels erläutert.

Es zeigen:
- Figur 1: einen Teil der einem Wirbelschichttrockner vorgeschalteten Feinkohleaufbereitung, schematisch als Fließbild und
- Figur 2: einen Teil des Austrags aus einer Kohlemühle mit nachgeschaltetem Schwingsieb und nachgeschaltetem Trogkettenförderer.

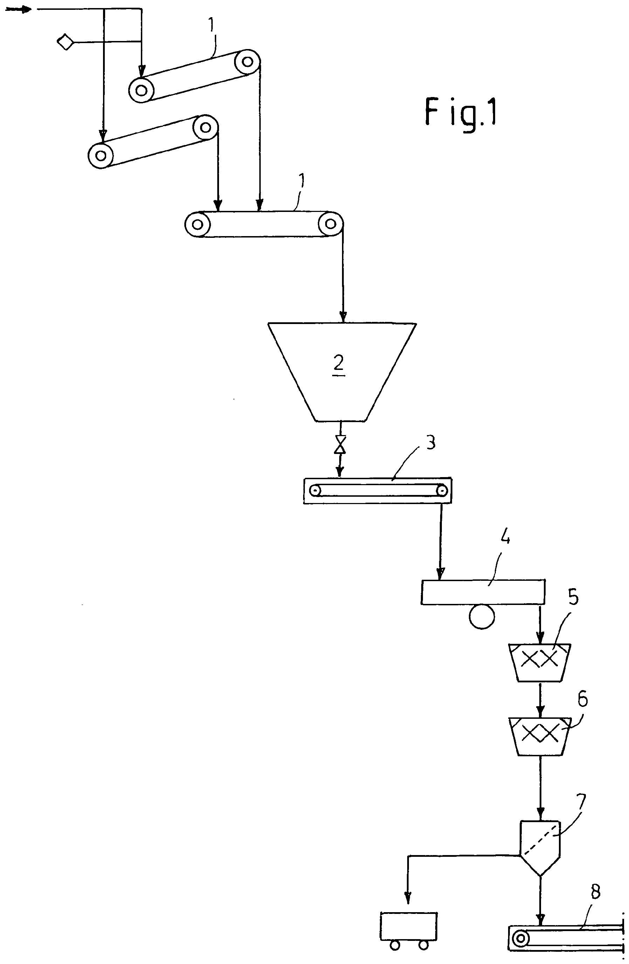

In der Figur 1 ist nur ein Teil der Kesselkohle-Aufbereitung von Braunkohle zur Verbrennung in einem Kessel zur Dampferzeugung dargestellt.

Die Rohbraunkohle mit einem Wassergehalt von bis zu etwa 65 % verlässt üblicherweise mit einer maximalen Stückgröße von beispielsweise 300 mm den Tagebau. Die aus dem Tagebau angelieferte Rohkohle wird über einen nicht dargestellten Brecher auf eine Korngröße von beispielsweise 0-50 mm vorgebrochen und über Förderbänder 1 einem oder mehreren Rohkohlebunkern 2 zugeführt. Sowohl vor dem Brecher als auch hinter dem Brecher ist eine Fremdkörperaushaltung zur Absonderung von Fremdkörpern wie beispielsweise Metallteilen oder Holzstücken vorgesehen. Auch sind in der Rohkohle häufig größere Mengen an mehr oder weniger verwachsenem Xylit anzutreffen.

Es ist sinnvoll und wünschenswert, einen möglichst großen Anteil an Fremdkörpern und Fremdstoffen einschließlich Holz und Xylit aus der Rohkohle sowohl vor als auch nach dem Brechen auszuhalten.

Die Rohbraunkohle wird aus dem Rohkohlenbunker 2 über einen Bunkerabzugsförderer 3 und eine nachgeschaltete Schwingrinne 4 einer ersten Kohlemühle 5 zugeführt. Die Kohlemühle 5 kann beispielsweise in bekannter Art und Weise als Hammermühle oder Prallmühle ausgebildet sein. In der ersten Kohlemühle 5 erfolgt eine Zerkleinerung der Braunkohle beispielsweise auf eine Korngröße zwischen 0 und 10 mm. Der ersten Kohlemühle 5 kann unmittelbar eine zweite Kohlemühle 6 nachgeschaltet sein.

Aus der zweiten Kohlemühle 6 tritt die vermahlene Braunkohle mit einer durchschnittlichen Korngröße von beispielsweise 0-2 mm aus.

Erfindungsgemäß ist der zweiten Kohlemühle 6 ein Kontrollsieb 7 unmittelbar nachgeschaltet. Der Siebdurchgang des Kontrollsiebs 7 wird einem Trogkettenförderer 8 aufgegeben, der mittelbar oder unmittelbar einen nicht dargestellten Wirbelschichttrockner beschickt. Der Siebüberlauf des Kontrollsiebes 7 wird vollständig aus dem Prozess ausgehalten.

Der Siebüberlauf des Kontrollsiebes 7 kann zusätzlich einer Sichtung unterzogen werden, um beispielsweise Holz und Xylit aus dem Prozess aushalten zu können. Das Holz und/oder Xylit werden als faserige Materialien, beispielsweise in einer Schneidmühle zerkleinert, und dem Prozess in zerkleinerter Form wieder aufgegeben.

Das Kontrollsieb 7 ist als Schwingsieb mit einer verhältnismäßig großen Maschenweite von beispielsweise 6 x 10 mm ausgebildet, so dass sichergestellt ist, dass der Austrag aus der zweiten Kohlemühle 6, soweit es sich hierbei um Braunkohle handelt, zu 100 % durch den Siebdurchgang geht.

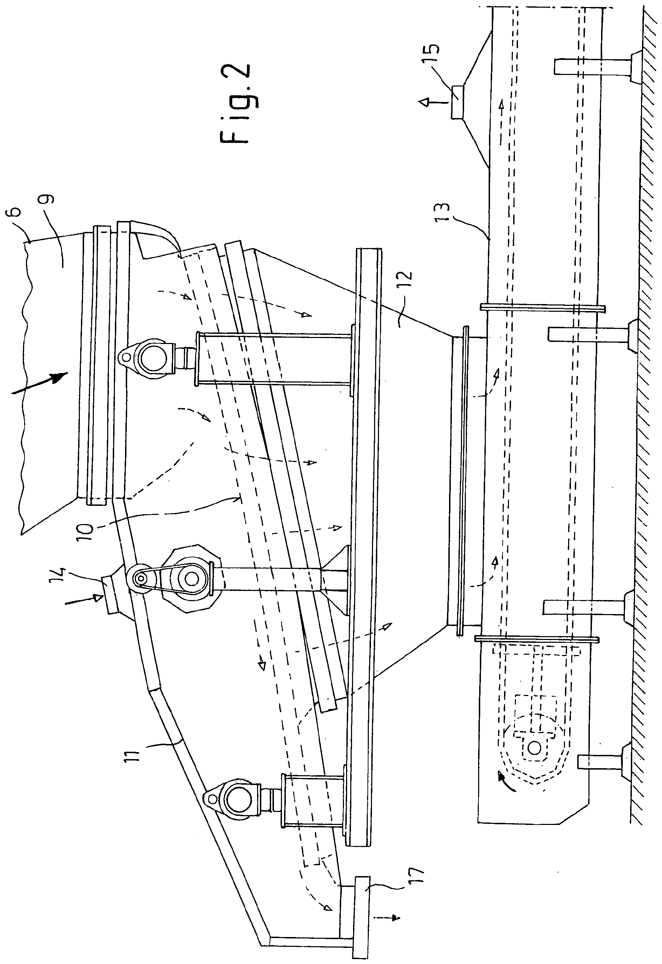

In Figur 2 ist die Austragsschurre 9 aus der zweiten Kohlemühle 6 mit den nachgeschalteten Aggregaten dargestellt. Unmittelbar unter der Austragsschurre 9 ist das Kontrollsieb 7 in Form eines Schwingsiebes angeordnet. Der Siebboden 10 des Kontrollsiebes 7 ist in einem Siebgehäuse 11 angeordnet, welches etwa gasdicht an die Austragsschurre 9 der Kohlemühle 6 angeschlossen ist. Das Siebgehäuse 11 ist wiederum mit seiner Austragsschurre 12 an einen mit 13 bezeichneten Trogkettenförderer angeschlossen.

Das Siebgehäuse 11 wird mittels Luft beheizt. Hierzu ist ein Luftanschluss 14 vorgesehen über den das Siebgehäuse 11 durch die Austragsschurre 12 in dem Trogkettenförderer 8 mit Gas gespült wird. Die Beheizung und Spülung des Siebgehäuses mit Luft beziehungsweise Rauchgas dient dazu, Anbackungen der Feinkohle innerhalb des Siebgehäuses 11 und/oder auf dem Siebboden 10 zu verhindern. Das Siebgehäuse kann mit einem Unterdruck von 5-10 mbar betrieben werden. Mit 15 ist ein Luftaustritt an dem Gehäuse des Trogkettenförderers 13 bezeichnet.

Das Siebgehäuse 11 ist mit einem offenen Siebaustritt 17 versehen, über den der Siebüberlauf abgezogen wird. Der Siebüberlauf kann beispielsweise auf einen hierfür vorgesehenes Band oder in einen hierfür vorgesehenen Container gefördert werden.

### Bezugszeichenliste:

1) Förderbänder
2) Rohkohlebunker
3) Bunkerabzugsförderer
4) Schwingrinne
5) erste Kohlemühle
6) zweite Kohlemühle
7) Kontrollsieb
8) Trogkettenförderer
9) Austragsschurre
10) Siebboden
11) Siebgehäuse
12) Austragsschurre des Siebgehäuses
13) Trogkettenförderer
14) Lufteintritt des Siebgehäuses 11
15) Luftaustritt des Trogkettenförderers
16) Gehäuse des Trogkettenförderers
17) Siebaustritt

## Patentansprüche

1. Verfahren zur Aufbereitung von Braunkohle zur Verbrennung und/oder Vergasung zwecks Stromerzeugung , wobei die grubenfeuchte Braunkohle zunächst vorgebrochen und anschließen in wenigstens einer Mahleinrichtung zerkleinert wird und anschließend die gemahlenen Braunkohle einer Trocknung zugeführt wird, wobei der Mahleinrichtung Mittel zur Fremdkörperaushaltung aus dem Materialstrom unmittelbar nachgeschaltet sind, und wobei der aus der Mahleinrichtung austretende Materialstrom einer Nachsiebung unterzogen wird, wobei die Siebweite so gewählt wird, dass der Siebdurchgang der Braunkohle 100 % beträgt.

2. Verfahren nach Anspruch 1, **dadurch gekennzeichnet, dass** die Braunkohle auf eine durchschnittliche Korngröße von 0-2 mm vermahlen wird.

3. Verfahren nach einem der Ansprüche 1 oder 2, **dadurch gekennzeichnet, dass** die Braunkohle nach Ihrer Vermahlung einer Trocknung in einem Wirbelbettrockner unterzogen wird.

4. Verfahren nach einem der Ansprüche 1 bis 3, **dadurch gekennzeichnet, dass** die Nachsiebung unter Verwendung einer Siebeinrichtung mit einer Maschenweite von wenigstens 4 x 6 mm, vorzugsweise von etwa 6 x 10 mm bis etwa 10 x 15 mm erfolgt.

5. Verfahren nach einem der Ansprüche 1 bis 4, **dadurch gekennzeichnet, dass** die Zerkleinerung der Braunkohle zweistufig unter Verwendung zweier hintereinandergeschalteter Mahleinrichtungen erfolgt, wobei die Nachsiebung hinter der zweiten Zerkleinerungsstufe erfolgt.

6. Verfahren nach einem der Ansprüche 1 bis 5, **dadurch gekennzeichnet, dass** die Nachsiebung mittels wenigstens eines belüfteten und/oder beheizten Schwingsiebes erfolgt, dass dem Mühlenaustrag unmittelbar nachgeschaltet ist.

## Claims

1. Process for processing brown coal for combustion and/or gasification for the purpose of power generation, wherein the brown coal moist from the pit is firstly subjected to preliminary crushing and is subsequently comminuted in at least one milling apparatus and the milled brown coal is subsequently fed to a drying operation, wherein means of removing foreign bodies from the material stream are installed immediately downstream of the milling apparatus, and wherein the material stream leaving the milling apparatus is subjected to after-sieving, with the sieve opening being selected so that essentially 100% of the brown coal passes the sieve.

2. Process according to either Claim 1, **characterized in that** the brown coal is milled to an average particle size of 0-2 mm.

3. Process according to either of Claims 1 and 2, **characterized in that** the brown coal after milling is subjected to drying in a fluidized-bed dryer.

4. Process according to any of Claims 1 to 3, **characterized in that** the after-sieving is carried out using a sieve apparatus having a mesh opening of at least 4 × 6 mm, preferably from about 6 × 10 mm to about 10 × 15 mm.

5. Process according to any of Claims 1 to 4, **characterized in that** the comminution of the brown coal is carried out in two stages using two milling apparatuses arranged in series, with the after-sieving being carried out downstream of the second comminution stage.

6. Process according to any of Claims 1 to 5, **characterized in that** the after-sieving is carried out by means of at least one ventilated and/or heated vibratory sieve which is installed directly downstream of the mill discharge facility.

## Revendications

1. Procédé de préparation de lignite pour la combustion et/ou la gazéification en vue de la production d'énergie électrique, selon lequel le lignite à l'humidité de la mine est tout d'abord pré-fragmenté, puis broyé dans au moins un dispositif de broyage, puis le lignite broyé est introduit dans un séchage, des moyens de filtration des corps étrangers du courant de matériau étant raccordés directement en aval du dispositif de broyage, et le courant de matériau sortant du dispositif de broyage étant soumis à un post-tamisage, la largeur du tamis étant choisie de sorte que le passage du lignite au travers du tamis soit de 100 %.

2. Procédé selon la revendication 1, **caractérisé en ce que** le lignite est broyé à une taille de particule moyenne de 0 à 2 mm.

3. Procédé selon l'une quelconque des revendications 1 ou 2, **caractérisé en ce que** le lignite est soumis après son broyage à un séchage dans un séchoir à lit fluidisé.

4. Procédé selon l'une quelconque des revendications 1 à 3, **caractérisé en ce que** le post-tamisage a lieu en utilisant un dispositif de tamisage ayant une largeur de mailles d'au moins 4 x 6 mm, de préférence d'environ 6 x 10 mm à environ 10 x 15 mm.

5. Procédé selon l'une quelconque des revendications 1 à 4, **caractérisé en ce que** le broyage du lignite a lieu en deux étapes en utilisant deux dispositifs de broyage raccordés en série, le post-tamisage ayant lieu après la deuxième étape de broyage.

6. Procédé selon l'une quelconque des revendications 1 à 5, **caractérisé en ce que** le post-tamisage a lieu au moyen d'au moins un tamis oscillant ventilé et/ou chauffé, qui est raccordé directement en aval de la sortie du broyage.
